# EUROPEAN PATENT SPECIFICATION

(11) **EP 0 671 123 B1**
(45) Date of publication and mention of the grant of the patent: **14.06.2000**
(21) Application number: 94830104.9
(22) Date of filing: 11.03.1994
(51) Int. Cl.: A01N 25/34, A01N 25/18

(54) **Insecticide formulation with solid support**
Insektizide Formulierung mit festem Träger
Formulation insecticide avec support solide

(43) Date of publication of application: 13.09.1995
(73) Proprietor: ZOBELE INDUSTRIE CHIMICHE S.p.A., I-38100 Trento (IT)
(72) Inventor: Pedrotti, Andrea, I-30070 Pietramurata, Trento (IT)
(74) Representative: Faggioni, Marco, Dr. Ing.

(56) References cited:
- EP-A- 0 195 967
- EP-A- 0 332 537
- EP-A- 0 542 080
- DE-A- 3 909 287
- GB-A- 2 130 883
- GB-A- 2 173 208
- US-A- 4 214 146
- US-A- 4 467 177
- US-A- 4 734 560
- PEBAX, Polyether Block Amides, Technical Brochure by ATOCHEM/elf aquitaine, Paris, FR

## Description

The present invention concerns an insecticide formulation comprising a solid support, particularly a formulation of this type allowing to develop a longlasting insecticide effectiveness. It also concerns a method to control harmful insects by using said insecticide formulation.

It is well known to the skilled in the art that any known active ingredients having an insecticide effect must be suitably "formulated" for their practical use. Here, and hereinafter in the description, the term "formulation" should not be intended only in its original meaning of a mixture of substances comprising the active ingredient suitable to allow its practical use, but should include - more generally - any type of means which, in association with the active ingredient and possibly with other adjuvants, allow said use.

In examining prior art, one can find a continuous growth of new insecticide formulations, for the purpose of making them more effective, safe and longlasting. In fact, while the initial trend in this field was to destroy or remove the harmful insects with sporadic treatments having fairly high concentrations of active ingredient, the current trend is instead to supply formulations allowing to keep low concentrations of active ingredient for a long period of time, so as to cause the destruction or removal of the insects present in the environment under control and simultaneously prevent the inlet of new insects.

The known insecticide formulations used for sporadic treatments include the following:
- liquid formulations for spray use, consisting of a solution of the active ingredient with suitable adjuvants into aqueous or organic solvents. These formulations are mainly used for shock treatments against flying and creeping insects;
- solid powder formulations, consisting of mixtures of the active ingredient with an inert powder support, for instance talc. As opposed to the previous formulations, those in powder form are almost exclusively used, with a residual effect, against creeping insects.

The most common formulations to remove or destroy insects, to be used instead in a continuous way, are based on the vaporization of an active ingredient from a solid support, through heating. According to the type of support, to the heating system, and thus to the effective lifetime of the formulation, the following types can be found:
- formulations in which the active ingredient is thoroughly mixed with a combustible support, the slow combustion of which determines the evaporation of said ingredient;
- formulations in which the active ingredient is absorbed into a solid support, and the evaporation of the active ingredient is obtained by heating said support onto a suitable heating surface;
- formulations in which the active ingredient is contained in a suitable vessel and, from this, it is caused to flow continuously, by capillary effect, into a solid support, the evaporation of the active ingredient being obtained by heating the support in an area far from the vessel.

The formulations of the first type mentioned hereabove consist of the so-called "fumigators" in the form of coils, whose shape allows a sufficiently long combustion time, for instance six to ten hours, so as to carry out a prolonged insecticide treatment. Seen the considerable amount of smoke produced by the combustion of the support, this type of formulation is mostly used in the open air.

The formulations of the second type consist of so-called "mats", usually made of cardboard material and imbued with an insecticide solution containing - besides the active ingredient - a solvent, a stabilizer, a vaporization retarder, as well as colour and perfume additives. Said mats are used by positioning them onto appropriate electric heating devices, whose heating surface is kept at a constant optimal temperature, preset according to the chemical-physical characteristics of the specific insecticide solution. The insecticide treatment with mats does not cause, contrary to the coils, any outlet of smokes and it lasts eight to ten hours; it is thus suited for overnight use in closed environments.

It should be said that, while in the fumigators the amount of active ingredient let out is perfectly constant throughout the time of their use, in the mats said amount varies in time depending on the presence, or not, of a vaporization retarder and depending, besides, on the initial concentration of the solution absorbed into the mat, on the temperature of the heating element and on the actual thickness of the mat. It is thus difficult to determine an exact "rating" of imbibition of the mat, since, according to the degree of initial imbibition, it is possible that too high concentrations of active ingredient may be let out in the first hours of use of the mat or, respectively, too low - and thus not effective - concentrations may be let out in the last hours of use of the mat.

The formulations of the third type described heretofore have been studied and prepared to meet the high market requests for longlasting formulations, wherein the formulation itself does not have to be replaced every day - like those of the first and second type - but can be used with continuity and effectiveness for a long period of time. Such formulations typically comprise a vessel in the form of a small bottle containing the insecticide solution, and a porous support partially dipped into the vessel and housed with its opposite end into an electric heater, apt to cause the vaporization of the insecticide solution which rises through the support by capillary effect. The insecticide solution contained in the vessel is formed - as well as of the active ingredient - of an organic solvent and of an antioxidant, and its amount is sufficient to guarantee a use of 300-600 hours (30-60 periods of ten hours of use, each period thus corresponding to about the length of one night).

With this last type of formulations, it is actually possible to obtain an outlet of active ingredient which, as well as longlasting, is also sufficiently constant in time. In fact, although one may notice that the concentration of active ingredient contained in the outlets slowly grows less as time goes by, due to progressive clogging of the porous support, the difference between the concentrations or active ingredient in the initial and final outlets anyhow keeps within the limits of safety and effectiveness of the product.

Nevertheless, this type of formulation creates other types of inconveniences, mainly tied to the practicalness and safety of use. It has in fact been seen how this formulation requires the presence of a vessel, which normally consists of a bottle of plastic material of sufficiently large dimensions to house the active ingredient and the solvent needed to dilute the same to the required extent. There is hence a problem of space due to the size of the vessel, as well as of the possible spilling of insecticide solution - seen the liquid nature of the product - while inserting the bottle into the electric heater.

The document EP-A-542080 discloses polyether-blockamide copolymers containing insecticides or acaricides which evaporates at ambient temperature or at the temperature they reach due to the body temperature of an animal. The document GB-A-2173108 discloses a shaped article made from a polyether-ester-amide resin containing a volatile substance, said substance being emitted in the environment at ambient temperature. The document GB-A-2130883 discloses an insecticidal fibrous mat for an electric fumigator having specific dimensions and impregnated with a composition comprising at least one pyrethroidal.

Starting from this state of prior art, the Applicant has carried out studies to determine a new type of insecticide formulation apt to combine the positive characteristics of the different formulations existing in known technique, while simultaneously avoiding their drawbacks. In particular, an object of the present invention is to supply a new insecticide formulation without any free liquid components and apt to let out, or to due to electrical or another form of heating a substantially constant amount or active ingredient for a long period of time, for instance at least 30 cycles of 10 hours each (30 nights).

Another object of the present invention is to supply an insecticide formulation having a protective effect on the active ingredient, so that no active ingredient is transferred into the environment at the ordinary temperatures of its storage, nor does the active ingredient undergo any deteriorations at the temperatures of its use; the content of active ingredient in the formulation can thus be entirely utilized for insecticide purposes.

A further object of the invention is to eliminate in the aforespecified formulation the drawbacks present in the known formulations and, particularly, to occupy a minimum space compared to the length of use thereof, and to be extremely practical in use.

These and other objects are reached, according to the present invention, by means of a solid insecticidal formulation, suitable to be used in a hearing device at a temperature between 100° and 150°C, and comprising a solid support imbued with an insecticidal liquid, characterised in that said support consists of a block copolymer formed by a polyether as an elastomeric polymer and a polyamide as a stiff polymer.

According to a characteristic of the invention, said block copolymer contains from 25% to 65%, and preferably from 40% to 50%, of stiff polymer.

According to a further characteristic of the invention, the volume of the solid support is in accordance with the amount of the insecticide, the lowest volume meaning the lowest content of insecticide.

The invention refers also to a method for preparing a solid insecticide formulation characterised by said solid support with an insecticidal liquid.

The invention further refers to a method to control harmful insects in an environment comprising the step of heating said solid insecticide formulation in a heating device, at a temperature between 100° and 150°C, to let out continuously or discontinuously for at least 300 hours into said environment an amount of insecticidal substance, biologically effective to obtain the removal or destruction of said insects.

The insecticide formulation of the present invention thus consists of a vaporization device using a solid support imbued with the active ingredient.

The overall effectiveness of this type of insecticide formulations actually depends on various parameters, among which the essential ones are the following:
- capacity of absorption of the support, intended as maximum quantity of insecticide solution apt to be absorbed by the mass unit of the support, without the physical and dimensional characteristics of the support being altered to an unacceptable extent;
- capacity of retention of the active ingredient into the support, at room temperature, intended as capability of the support to stably retain therein the insecticide solution, without letting out any liquid or gaseous components into the environment;
- capacity of transfer of the active ingredient from the support, at the temperature of use, intended as capability of the support to release the insecticide solution gradually and as constantly as possible through tune;
- stability of the support, at the temperature of use, throughout the expected lifetime;
- stability of the insecticide solution absorbed into the support, intended as capability of the support to guarantee the non-degradation of said solution up to the moment of its transfer into the environment;
- volatility of the insecticide solution;
- insecticide activity of said solution.

Each of these parameters, both on its own and in combination with one or more of the others, has a strong influence on the effectiveness, activity and stability of the formulations. The inventor of the present invention has thus met considerable difficulties, first of all in conjecturing - in contrast with the previous teachings of known technique - the existence of a solid support apt to absorb a liquid substance, suited for use in an insecticide formulation having a long lifetime and sufficiently resistant to the high temperatures of use thereof, then in conceiving a specific support having these characteristics, and ultimately in finding an optimal combination between said support and an insecticide solution.

The long studies carried out have finally enabled the Applicant to obtain the insecticide formulation according to the invention, which is apt to overcome in a new and original way the above drawbacks and inconveniences of prior art formulations meant for continuous use. In fact, the insecticide formulation of the present invention advantageously combines the characteristics of practicalness and safety of the formulations comprising solid supports homogeneously imbued with an insecticide solution (mats), with the characteristics of a long life and a constant outlet, provided by the formulations comprising a vessel of liquid insecticide solution evaporating onto a heated solid support. Thus, according to the invention, the volume of the insecticide formulation is notably smaller than the volume of prior art formulations having the same lifetime; its insecticide effectiveness remains unaltered even after a prolonged use, whether it be of the continuous type or of the cyclic (i.e. with intermediate periods of non use) type; the insecticide solution can consist of the active ingredient as such, hence eliminating the need for solvents, retarders, stabilizers and other additives which are of common use in this field.

This particularly favourable behaviour of the insecticide formulation according to the invention is allowed by the choice of the special material used to absorb the active ingredient; in fact, according to the fundamental discovery lying at the basis of the present invention, if the solid support meant to be imbued with the insecticide solution consists of a plastic material, such as a block copolymer comprising a polyether as an elastomeric polymer and a polyamide as stiff polymer, it simultaneously acts as a large capacity container for the active ingredient and as an element of protection thereof, apt to limit its outlet rate and prevent its degradation at the temperatures of use (110-150°C) of the insecticide formulation.

A possible explanation for the extraordinary characteristics of the copolymeric support of the present invention - which should anyhow not be intended as limiting the invention itself - could be that the polyether elastomeric segments of the block copolymer are responsible for the function of "container", while the polyamide stiff segments are responsible for the "retaining and protecting" function, which allows to obtain a gradual and regular outlet of active ingredient throughout time.

A polymeric material of the aforementioned type, which has been found effective, is a polyether-polyamide block copolymer obtained through the linear regular polymerization of polyether segments alternated with polyamide segments. Such thermoplastic compounds have excellent chemical and mechanical properties and are available on the market under various commercial names. Thanks to their mechanical characteristics, the formulation can take up any desired shape, whereas, by suitably varying the percentages of the polyether fraction in respect of the polyamide fraction, present in the copolymer, it is possible to vary the power of absorption and that of retention and protection of the support in respect of the active ingredient, according to the different characteristics of use of the insecticide formulation and to the special active ingredient used.

The insecticide formulation of the present invention can be used with any known pesticide, according to the type of insect or insects having to be controlled. Preferably, the pesticide is an insecticide belonging to the known classes of chemical products of this type, such as organic phosphorous insecticides, the lipidamide insecticides described for example in EP-A-549418, EP-A-547972, EP-A-524041 and EP-A-369762, the natural repellants as citronella oil, the natural pyrethrins as pyrethrum extract, and the synthetic pyrethroids.

The synthetic pyrethroids form a class of preferred insecticides for use in the insecticide formulation of the present invention, and they can be selected for example among acrinatrine, aletrine as D-aletrine, Pinamina®, benphlutrine, biphentrine, bioaletrine as Pinamina Forte®, S-bioaletrine, esbiotrine, esbiol, bioresmetrine, cycloprotine, ciphlutrine, beta-ciphlutrine, cialotrine, lambda-cialotrine, cipermetrine, alpha-cipermetrine, beta-cipermetrine, ciphenotrine, deltametrine, empentrine, esphenvalerate, phenpropatrine, phenvalerate, flucintrate, tau-fluvalinate, kadetrine, permetrine, phenotrine, praletrine as Etoc®, resmetrine, tephlutrine, tetrametrine or tralometrine.

Among the aforecited insecticide compositions, esbiotrine is particularly preferred.

The copolymeric support of the insecticide formulation according to the present invention can be formed in any shape; a shape referred to herein, by way of non-limiting example, is the rectangular shape with a low thickness. After they have been produced - for example by injection molding or by sheet casting and successive blanking - the mats forming the solid support of the insecticide formulation are imbued with the active ingredient.

The imbibition can be carried out by any known method adopted in technique to obtain the absorption of a liquid into a solid. A possible process of imbibition comprises the dipping of the supports - already cut into the selected shape - into a bath containing the active ingredient, hermetically sealed and thermostated at a suitable imbibition temperature, for instance similar to the temperature of use of the insecticide formulation (100-150°C). The imbibition of the mats can be obtained both under atmospheric pressure and under pressure or under vacuum, and the heating of the bath can be obtained with any conventional system, as a contact heating system, an indirect heating system with heating fluid, a microwave heating system, and the like.

The insecticide formulation according to the present invention is used to put under control the presence of insects, by being homogeneously heated at a temperature sufficient to allow the evaporation of the active ingredient contained therein. Said temperature is normally between 100° and 150°C, and it is preferably obtained by laying the mat onto an electric heating device or another device suitable to heat the formulation, like for instance a microwave or an induction system. Due to the heat transmitted thereto, the insecticide formulation of the present invention spreads into the environment a controlled amount of active ingredient and acts for a long period of time, exceeding 300 hours - both continuously and discontinuously - thereby fully accomplishing the objects of the invention.

It has finally been found that, during the imbibition step, the support of the insecticide formulation of the present invention increases its volume, directly in proportion to the amount of active ingredient being absorbed. Furthermore, a symmetrical and proportional decrease in volume can be noticed while the active ingredient is being let out into the environment, until when - upon exhaustion of the active ingredient - the support returns to its initial size. This particular characteristic of the product can be advantageously and easily used as a helpful and reliable parameter to reckon the degree of exhaustion of the formulation, for instance by using a container for the support, allowing to check the dimensions of this latter in respect of one or more fixed references.

The above statements are clearly confirmed by the following examples of preparation and use. The insecticide formulations preferred among those which were tested, were in fact still effective after more than 300 hours of use, and in this period there was no altering or evaporation of the support, nor any degradation of the active ingredient contained therein, while the outlet rate of active ingredient was substantially constant in time.

### EXAMPLES

The object of the present invention will now be disclosed more clearly by providing some test examples of preparation and use of the insecticide formulations obtained according to the teachings of the invention, and some comparison examples. It is of course understood that said examples are supplied merely to illustrate the invention and they should hence in no way be considered as limiting its protection scope.

### Products

The test products were selected among the polyether-polyamide block copolymers available on the market. In particular, use was made of those produced by the French company ELF-ATOCHEM (Paris), sold under the name of PEBAX®. After a series of preliminary selection tests, carried out on all the range of PEBAX products supplied by the producers (2533, 3533, 4033, 5533, 6033, 7033), three different products were selected as the most interesting ones to be tested, and precisely, PEBAX 3533, PEBAX 4033, and a mixture containing 50% of each of these two products. The polyamide content in the three aforecited products was more or less the following:
PEBAX 3533 - about 40% of polyamide - (product A)
50% Mixture - about 45% of polyamide - (product B)
PEBAX 4033 - about 50% of polyamide - (product C)
   The specific weight of the three tested products was identical, namely equal to 1.01 g/cm³.

### Examples of preparation

The purpose of these tests was to determine the absorption curve of the three aforecited products in respect of a specific active ingredient, and the object was to obtain an overall absorption of 500-700 mg of active ingredient in each sample. Said amount was in fact reckoned to correspond to the dose required for a use of 30 cycles of 10 hours each.

### Example of preparation A

Four sets of samples were prepared with product A, each set comprising seven rectangular supports having the dimensions of 30x19x2 mm. The supports of each set of samples differed from those of the other sets due to their thickness which corresponded, in each set, to 1, 2, 3 and 4 mm respectively. The test supports were prepared - starting from the product in granules, as supplied by the producer - with a conventional injection molding process, using a master mold with a single impression both for this test and for the successive ones.

The supports thus prepared were first of all weighed, and the average weights of the four sets of samples of different thickness were as follows:

| mm | 1 | 2 | 3 | 4 |
|---|---|---|---|---|
| g | 628 | 1211 | 1737 | 2222 |

The weight differences between the single supports, in respect of the aforementioned average values, were modest, the maximum standard deviation being of 6 mg (for the 1 mm test pieces, less for the others).

The supports were then dipped into an esbiotrine bath (93% technical esbiotrine was used) kept at 100°C, with an atmospheric pressure, and were left therein up to obtaining the absorption of esbiotrine into the product of the support.

After one hour, the supports were removed from the bath, were left to cool for 30 minutes, were washed with acetone by being dipped therein for a few seconds and then causing the same to evaporate, and were subsequently weighed. The difference between this weight and the initial weight was reckoned as quantity of esbiotrine which had been absorbed.

The supports were then dipped again into the absorption bath and left therein for two more hours - which thus made a total of three hours - and, after having been removed from the bath, they were cooled, washed with acetone and weighed, as done previously. Also in this case, the difference between their present weight and their previous weight was reckoned as quantity of esbiotrine which had been absorbed.

The aforedescribed process was repeated once again after another hour of esbiotrine bath. Summing up, the weights were measured after the first, third, and fourth hour of bath.

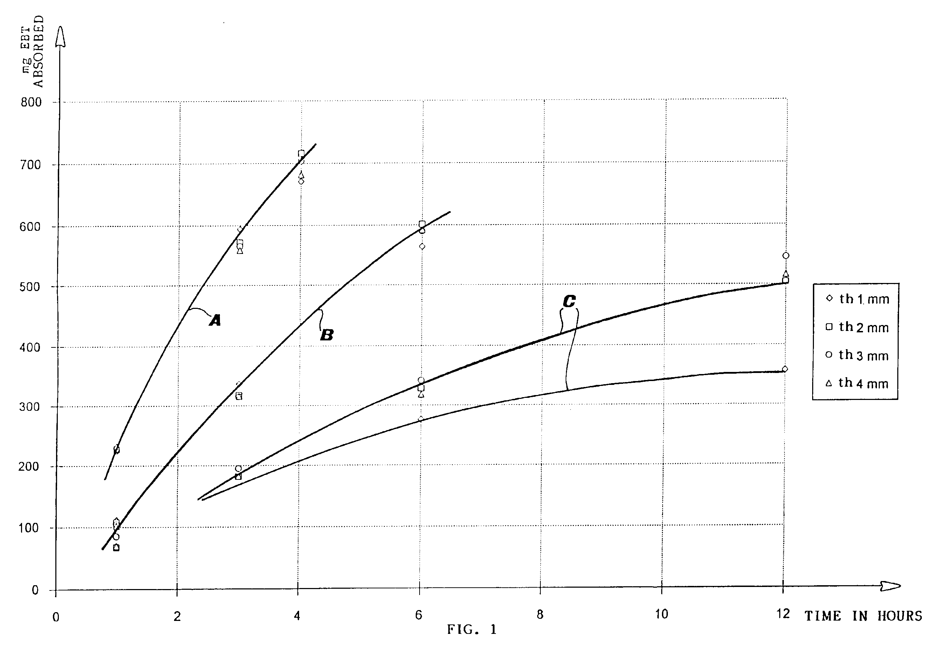

The absorption results on the seven samples of each set showed an excellent repeatability, with an average absorption equal to 700 mg and a standard deviation of 20 mg. Said results are reported in the graph of figure 1 (curve A).

### Example of preparation B

Four sets of samples were prepared with product B, exactly in the same way as described in the Example of preparation A.

The average weights of the supports thus prepared were the same as those of the previous Example of preparation A:

| mm | 1 | 2 | 3 | 4 |
|---|---|---|---|---|
| g | 628 | 1211 | 1737 | 2222 |

Also in this case the weight variations of the single supports were neglectable.

The supports were then treated in the same way as in the Example of preparation A, with the only difference that the absorbed quantity of active ingredient was measured at the end of the first, third and sixth hour. After having examined the absorption capability of this product, it was in fact presumed that the desired absorption (500-700 mg) would be obtained within this time interval.

The results of the absorption tests on the seven samples of each set showed an excellent repeatability, with an average absorption of 580 mg and a maximum standard deviation of 20 mg. Also these results are reported in the graph of figure 1 (curve B).

### Example of preparation C

Also with product C four sets of samples were prepared in a fully identical way to that described above in the Example of preparation A.

The average weights of the supports thus prepared were the same as those of the Example of preparation A:

| mm | 1 | 2 | 3 | 4 |
|---|---|---|---|---|
| g | 628 | 1211 | 1727 | 2222 |

Also in this case the weight variations of the single supports were neglectable.

The supports were then treated in the same way as in the Example of preparation A, with the only difference that the absorbed quantity of active ingredient was measured at the end of the first, third, sixth and twelfth hour. After having examined the absorption capability of this product, it was in fact presumed that the desired absorption (500-700 mg) would be obtained within this time interval.

The results of the absorption tests on the seven samples of each set showed an excellent repeatability, with an average absorption of 520 mg and a maximum standard deviation of 25 mg (for the 1 mm test pieces, less for the others). Also said results are reported in the graph of figure 1 (curve C).

On examining the results of the aforedescribed preparation tests one can draw the following conclusions:
- the speed of esbiotrine absorption in the different products decreases as the polyamide fraction increases, thereby confirming the conjectures made on the ways in which the formulation of the present invention works;
- for each tested product, the absorption speed is substantially constant and independent from the thickness of the support. The quantity of esbiotrine absorbed in the product is hence directly proportional to the time of permanence of the support into the imbibition bath;
- the absorption speed decreases, up to stopping, as the product gets near to saturation. Said state of saturation was partially reached only in one case (1 mm test pieces of product C), while in the other cases the esbiotrine absorption was interrupted when reaching an amount of absorbed esbiotrine equal to about 600 mg, which amount was deemed sufficient for a use of the support of at least 300 hours;
- the 1 mm supports appear to be remarkably deformed at the end of the imbibition process.

Successive tests - not illustrated herein - have proved, moreover, that an uninterrupted imbibition (that is, without removing the supports from the bath and providing for an intermediate cooling thereof) allows to obtain a more efficient absorption, while the dipping time remains unvaried. Likewise, it has been found that an increase in the temperature of the bath from 100°C to 120°C, allows to obtain a notable rise in the absorption speed, but this is apt to cause a further deformation of the supports and cracks in their external layer, common to all the supports independently from their thickness. It is thus deemed that 120°C form a top temperature limit for the imbibition bath, not to be exceeded.

Imbibition tests have also been carried out at temperatures below 100°C, as far as reaching ambient temperatures, and it has been found that the imbibition of the supports takes place regularly even if, obviously, at increasingly lower absorption speeds. The optimal temperature of the bath should thus be chosen among those specified heretofore, according to the mechanical characteristics of the single product being used, and to the desired absorption speed which, obviously, directly conditions the productivity of the production process of the supports.

### Example of preparation D - Comparison

By way of comparison, also conventional cardboard mats were prepared and imbued with esbiotrine up to obtaining an esbiotrine absorption of about 600 mg in each mat.

### Example of use 1

The test supports prepared according to the Example of preparation A were inserted into electric heating devices, at a temperature between 120°C and 125°C, so as to test the effectiveness in use of the formulations of the present invention. The 1 mm thick supports were not subjected to this test as they were deformed during the imbibition process.

The test was carried out on groups of four supports for each type of thickness. The supports, having an average content of about 700 mg of absorbed esbiotrine (with standard deviation of 20 mg), were subjected to vaporisation cycles of ten hours, followed by rest cycles of fourteen hours, at an ambient temperature of 25°C ± 2°C.

At the end of each vaporization cycle, the supports were weighed with an analytical scale and the rate per hour of evaporated active ingredient was determined as proportion between the reduction in weight occurred during the vaporisation cycle and the length in hours of the cycle itself.

The vaporisation tests were carried out up to the twentythird cycle when the supports started to show signs of blackening and cracking (only for the 2 and 3 mm mats).

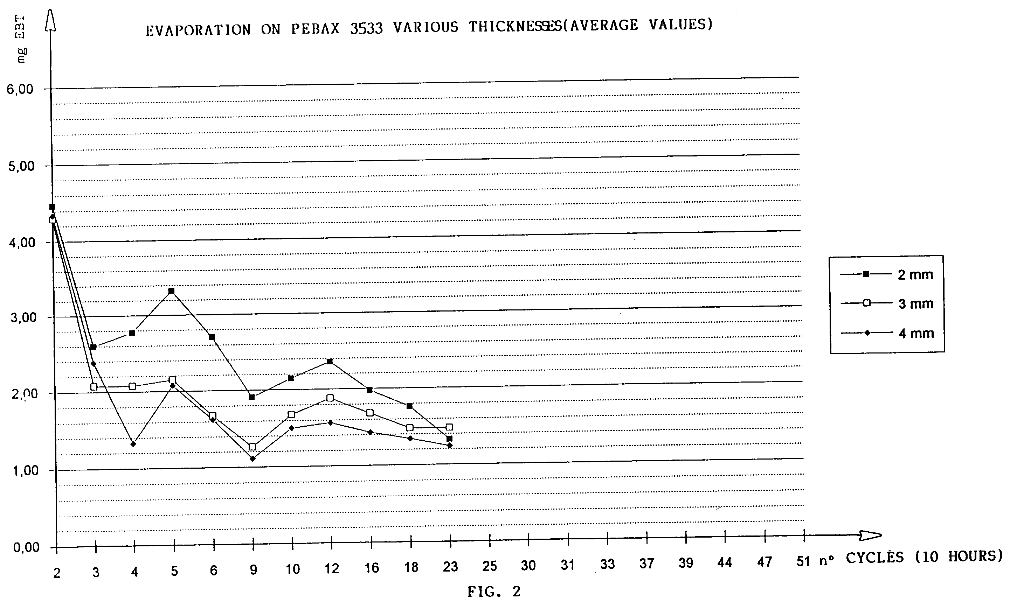

The results obtained from the single measurements, generally very similar one to the other were averaged and are reported on the graph of figure 2.

On examining said results one may notice that the outlet of esbiotrine shows an initial peak of 4 to 5 mg/h and it then settles, after the second cycle and up to the twentythird cycle, at a sufficiently stable value of 1 to 3 mg/h for the 2 mm test pieces, and of 1 to 2 mg/h for the 3 and 4 mm test pieces. These oscillations are anyhow not particularly significant and widely fall within the tolerances allowed for a safe and efficient use of the insecticide formulation.

### Example of use 2

The test supports prepared according to the Example of preparation B were treated similarly to what has been described in the above Example of use 1. Also in this case the 1 mm thick supports were not tested, as they were deformed during the imbibition process.

The supports showed an average content of about 580 mg of absorbed esbiotrine, with standard deviation of 20 mg.

The vaporisation tests on the 3 and 4 mm thick supports were interrupted at the fiftyfirst cycle, when the supports still did not show any sign of ageing, while the tests on the 2 mm thick supports were interrupted at the thirtythird cycle since they started to show signs of blackening.

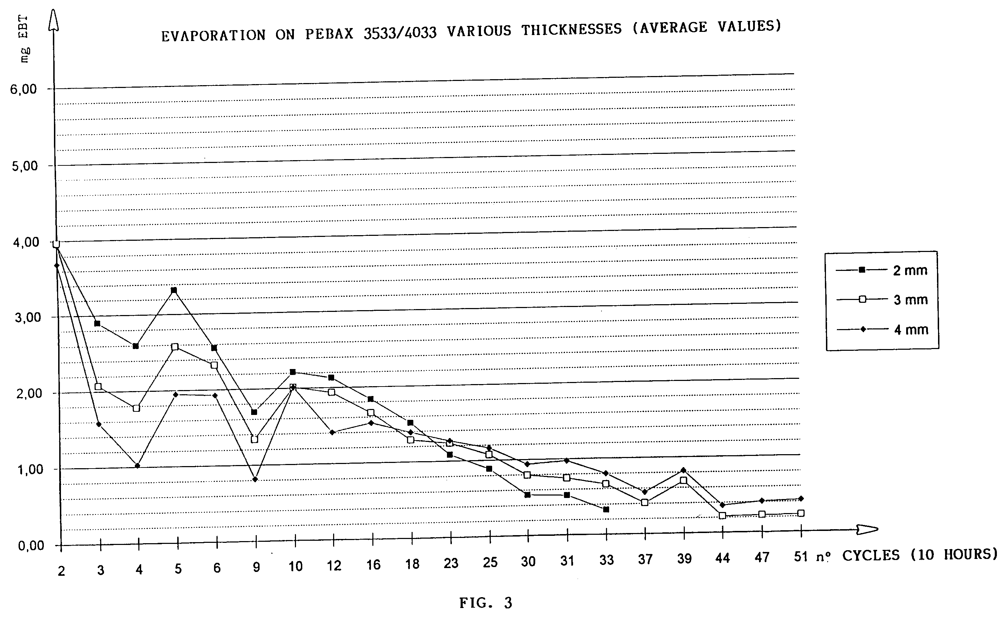

The results obtained from the single measurements, generally very similar one to the other, were averaged and are reported on the graph of figure 3.

On examining said results one may notice that the esbiotrine outlet shows an initial peak of 3 to 4 mg/h and then settles, after the second cycle, at a sufficiently stable value of 0.5 to 3 mg/h up to the thirtyninth cycle. In the successive cycles, the outlet rate gradually drops even further, down to about 0.2 mg/h. These oscillations are anyhow not particularly significant and widely fall within the tolerances allowed for a safe and efficient use of the insecticide formulation.

### Example of use 3

The test supports prepared according to the Example of preparation C were treated similarly to what has been described in the above Example of use 1. Also in this case the 1 mm thick supports were not tested, as they were deformed during the imbibition process.

The supports showed an average content of about 520 mg of absorbed esbiotrine, with a maximum standard deviation of 25 mg (for the 1 mm test pieces).

The vaporisation tests on the 3 and 4 mm thick supports were interrupted at the fiftyfirst cycle, when the supports still showed no signs of ageing, while the tests on the 2 mm thick supports were interrupted at the thirtythird cycle.

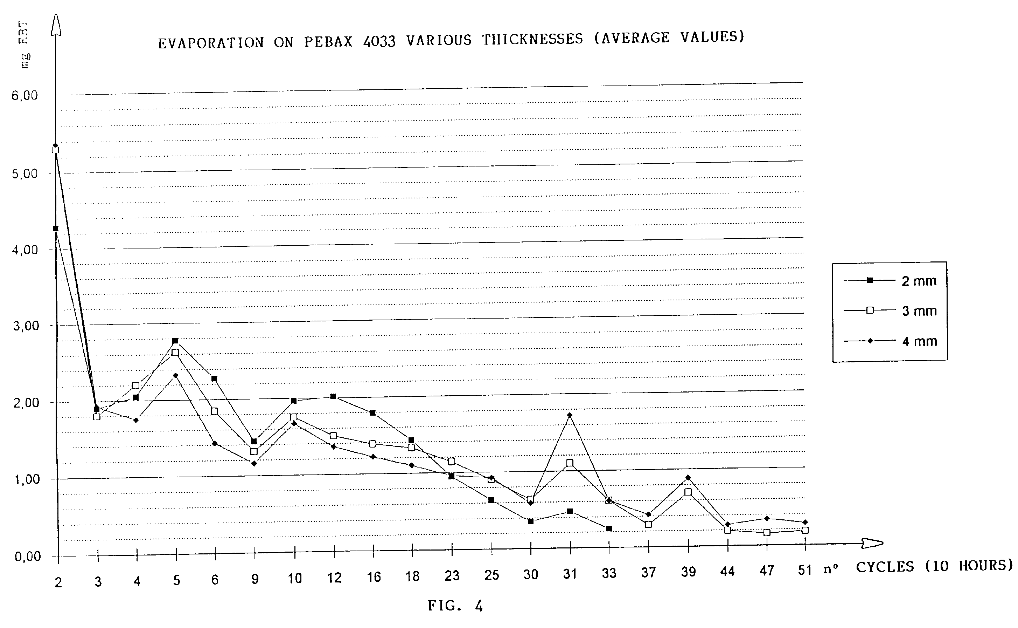

The results obtained from the single measurements, generally very similar one to the other, were averaged and are reported on the graph of figure 4.

On examining said results one may notice that the esbiotrine outlet shows an initial peak of 4 to 6 mg/h and then settles, after the second cycle, at a sufficiently stable value of 0.5 to 3 mg/h up to the thirtyninth cycle. Said behaviour is probably due to the fact that, on account of the imbibition process adopted, a further amount of active ingredient remains on the outer surface of the support. In the successive cycles, the outlet rate gradually drops even further, down to about 0.2 mg/h. These oscillations are anyhow not particularly significant and widely fall within the tolerances allowed for a safe and efficient use of the insecticide formulation.

On examining the results of the aforedescribed tests of use, one can draw the following conclusions:
- the thickness of the supports has a scarce influence on the time rate of outlet of the active ingredient. The higher thicknesses anyhow ensure a more regular outlet, while the thicknesses which are too low can create problems of insufficient stability to heat;
- the time rate of outlet of the active ingredient is slightly reduced with the increase in the percentage of polyamide, and thus in the stiffness of the product, to which there corresponds however an improved stability to heat of the supports;
- the time rate of outlet of the active ingredient, and thus the effectiveness in use, shows a favourably constant behaviour for long periods of use, exceeding 300 hours in the case of the stiffer products B and C.

### Example of use 4 - Comparison

The comparison test mats, prepared according to the Example of preparation D, were subjected to the same type of test as in the Example of use 1, at two different temperatures of the heating device, namely 125°C and 150°C.

The test was carried out on ten mats inserted into electric heating devices at a temperature of 150°C, and on ten further mats inserted into said devices at a temperature of 125°C. After each cycle of use, lasting ten hours, one mat of each group was removed and analysed in gas-chromatography so as to determine the amount of esbiotrine left in the mat. In this way it was possible to trace - by knowing the initial quantity absorbed in the mat - the respective vaporisation curve.

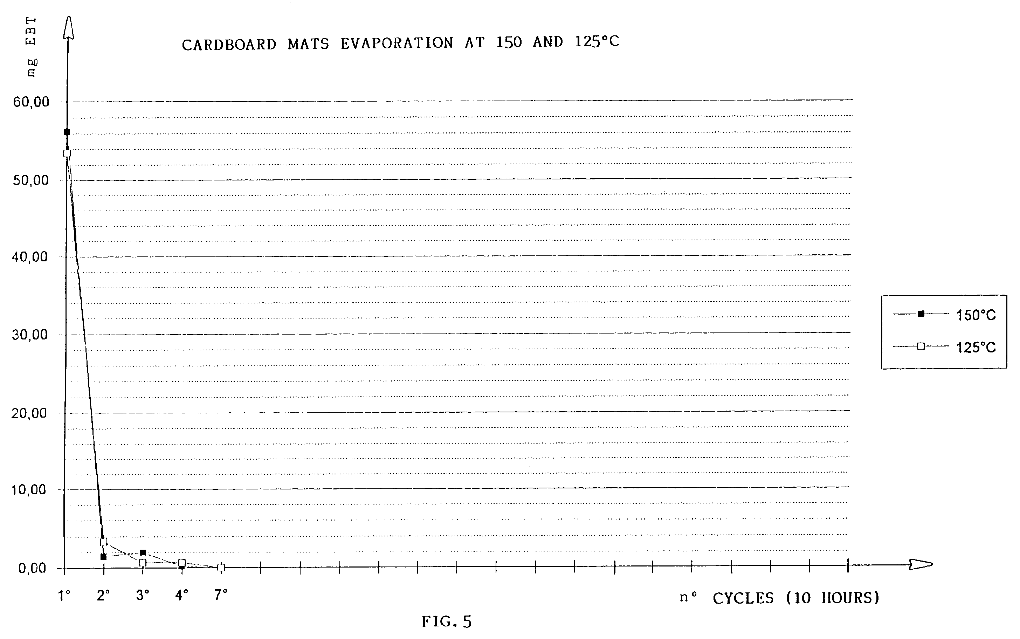

After five to seven cycles, the esbiotrine content found in the mats was equal to zero. The results of the tests are illustrated in figure 5, from which it can be seen how the time rate of esbiotrine outlet is extremely high in the first cycle and then rapidly drops down to zero within the seventh cycle.

From this cycle of tests it has thus been possible to establish that the conventional support is not apt to retain the active ingredient.

### Verification test

The purpose of this test was to verify that the method allowing to determine the rate of esbiotrine evaporation by weighing on an analytical scale, adopted in the Examples of use 1, 2 and 3, was representative and accurate.

For this purpose, the plastic supports removed at the end of the vaporisation tests were analysed in gas-chromatography and the amount of esbiotrine thus detected was compared to the difference between the initially absorbed esbiotrine and the evaporated esbiotrine, reckoned with the weighing method.

In the case of the 2 and 3 mm thick supports, formed with product A (less polyamide content), on which the ageing and cracking effects had become more evident, there was found to be a loss of active ingredient equal to 15% of that absorbed.

In all the other cases - namely the supports of different thickness formed with products B and C, and the 4 mm thick supports formed with product A - no loss of active ingredient was found after analysis, which means that the amount of esbiotrine detected was equal to the initial one, minus that which had evaporated. As a logical consequence, it also turned out that no evaporation of the plastic support had taken place.

The aforespecified results clearly prove the accuracy of the method adopted to determine the vaporisation rate, the stability to heat of the active ingredient absorbed in the plastic support, the stability of the plastic support having a suitable thickness and a correct percentage of polyamide, and finally the fact that the weight of the plastic support is not reduced even after a prolonged use thereof.

### Test of biological effectiveness

The biological effectiveness of the insecticide formulations of the present invention was tested according to the normal 2m³ test protocol, following which fifty adult female mosquitoes of the Aedes aegypti species, fed with blood, were exposed to the vapour of the insecticide formulations of the invention, within a closed space having the above volume. The count of the fallen mosquitoes was made every minute and the significant values were reckoned to be the moments in which the knocking down of mosquitoes had reached 50% (KT₅₀) and, respectively, 90% (KT₉₅) of the initial value.

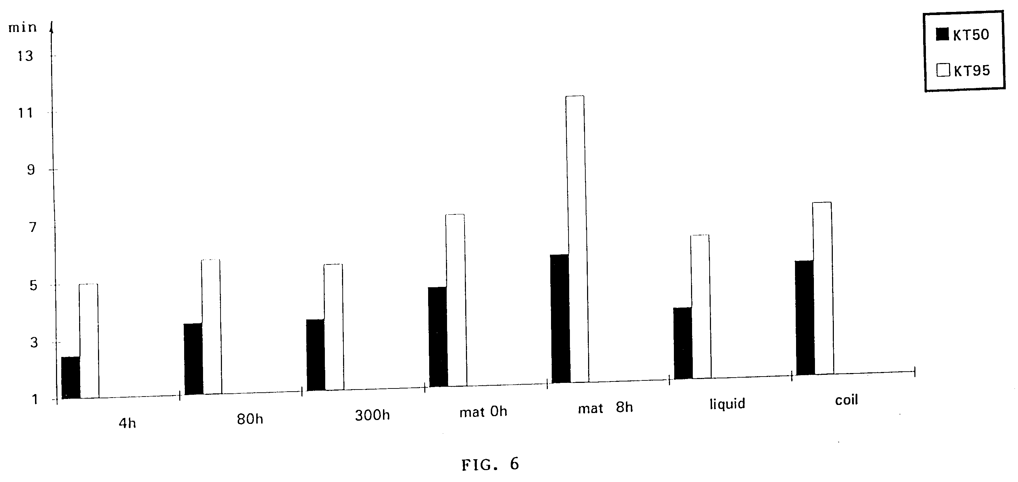

The results of the biological tests carried out with the various samples described heretofore were substantially uniform, both for different samples and for equal samples taken at different times of their useful lifetime. Said values were between 2 and 3 minutes for the KT₅₀ and between 5 and 6 minutes for the KT₉₅. Such values are equal to or higher than those provided by the more effective products which can be found on the international market. Figure 6 reports some comparison data between the values of KT₅₀ and of KT₉₅ respectively: of a formulation according to the invention formed with product B (after 4, 80 and 300 hours of use); of a conventional mat, both new (with a hot electric heating device as per the standard protocol) and after 8 hours of use; of a vaporizable liquid product (liquid); and of a fumigator (coil). For these last ones, figure 6 reports the best results among those obtained up to date.

A comparison test was also carried out using supports of the same plastic material not imbued with the insecticide solution; no effect was obtained on the insects.

From an overall survey of the data supplied by the previous Examples, it can be stated that:
- a process has been conceived for the imbibition of a plastic support, by dipping the same into a thermostatic bath of active ingredient;
- a special plastic support has been discovered, apt to ensure a regular and sufficient evaporation of the active ingredient absorbed therein, with a longlasting biological effectiveness;
- said plastic support is also apt to guarantee a protective effect on the active ingredient, throughout the period of use and up to exhaustion of the formulation;
thereby fully reaching the objects of the present invention.

## Claims

1. A solid insecticidal formulation, suitable to be used in a heating device at a temperature between 100° and 150°C, and comprising a solid support imbued with an insecticidal liquid, characterised in that said support consists of a block copolymer formed by a polyether as an elastomeric polymer and a polyamide as a stiff polymer.

2. Insecticidal formulation as in claim 1) wherein said block copolymer contains from 25% to 65% of polyamide.

3. Insecticidal formulation as in claim 2), wherein said block copolymer contains from 40% to 50% of polyamide.

4. Insecticidal formulation as in any one of the previous claims, wherein said insecticidal liquid comprises an active ingredient selected among the organic phosphorous-type insecticides, the lipidamide-type insecticides, the natural repellents, the natural pyrethrins, or the synthetic pyrethroids.

5. Insecticidal formulation as in claim 4), wherein said synthetic pyrethroids are selected among acrinatrine, aletrine as D-aletrine, benphlutrine, biphentrine, bioaletrine, S-bioaletrine, esbiotrine, esbiol, bioresmetrine, cycloprotine, ciphlutrine, beta-ciphlutrine, cialotrine, lambda-cialotrine, cipermetrine, alpha-cipermetrine, beta-cipermetrine, ciphenotrine, deltametrine, empentrine, esphenvalerate, phenpropatrine. phenvalerate, flucintrate, tau-fluvalinate, kadetrine, permetrine, phenotrine, praletrine. resmetrine, tephlutrine, tetrametrine or tralometrine.

6. Insecticidal formulation as in 4), wherein said synthetic pyrethroids consists of esbiotrine.

7. Insecticidal formulation as in claims 4) to 6), wherein said insecticidal liquid comprises only the active ingredient, with no adjuvants.

8. Insecticidal formulation as in any one of the previous claims, wherein said insecticidal liquid is imbued into the support in a maximum amount in weight corresponding to 150% the weight of the non-imbued support.

9. Method for preparing a solid insecticide formulation according to claims 1 to 8 characterised by imbuing said solid support with an insecticidal liquid.

10. Method as in claim 9), wherein said imbibition temperature is comprised between 100° and 120°C.

11. Method to control harmful insects in an environment comprising the step of heating a solid insecticide formulation according to claims 1) to 8) in a heating device, at a temperature between 100° and 150°C, to let out continuously or discontinuously for at least 300 hours into said environment an amount of insecticidal substance, biologically effective to obtain the removal or destruction of said insects.

12. Method as in claim 11), wherein said environment is a closed environment.

## Patentansprüche

1. Feste insektizide Formulierung, die zur Verwendung in einer Heizvorrichtung bei einer Temperatur zwischen 100° und 150°C geeignet ist und einen festen Träger umfaßt, der mit einer insektiziden Flüssigkeit getränkt ist, dadurch gekennzeichnet, daß der Träger aus einem Blockcopolymer besteht, das aus einem Polyether als einem elastomeren Polymer und einem Polyamid als einem steifen Polymer gebildet ist.

2. Insektizide Formulierung nach Anspruch 1, bei der das Blockcopolymer zwischen 25 % bis 65 % Polyamid enthält.

3. Insektizide Formulierung nach Anspruch 2, bei der das Blockcopolymer zwischen 40 % bis 50 % Polyamid enthält.

4. Insektizide Formulierung nach einem der vorangehenden Ansprüche, bei der die insektizide Flüssigkeit einen aktiven Inhaltsstoff umfaßt, der unter den organischen Insektiziden vom Phosphortyp, den Insektiziden vom Lipamidtyp, den natürlichen Reppelentien, den natürlichen Pyrethrinen oder den synthetischen Pyrethroiden ausgewählt ist.

5. Insektizide Formulierung nach Anspruch 4, bei der die synthetischen Pyrethroide unter Acrinathrin, Alethrin wie D-Alethrin, Benphluthrin, Biphenthrin, Bioalethrin, S-Bioalethrin, Esbiothrin, Esbiol, Bioresmethrin, Cycloprothin, Ciphluthrin, Beta-Ciphluthrin, Cialothrin, Lambda-Cialothrin, Cipermethrin, Alpha-Cipermethrin, Beta-Cipermethrin, Ciphenothrin, Deltamethrin, Empenthrin, Esphenvalerat, Phenpropathrin, Phenvalerat, Flucintrat, Tau-Fluvalinat, Kadethrin, Permethrin, Phenothrin, Pralethrin, Resmethrin, Tephluthrin, Tetramethrin oder Tralomethrin ausgewählt sind.

6. Insektizide Formulierung nach Anspruch 4, bei der das synthetische Pyrethroid aus Esbiothrin besteht.

7. Insektizide Formulierung nach Ansprüchen 4 bis 6, bei der die insektizide Flüssigkeit nur den aktiven Inhaltsstoff ohne Zusatzstoffe enthält.

8. Insektizide Formulierung nach einem der vorangehenden Ansprüche, bei der der Träger mit der insektiziden Flüssigkeit in einer maximalen Menge im Gewicht, entsprechend 150 % des Gewichtes des nicht getränkten Trägers, durchtränkt wird.

9. Verfahren zur Herstellung einer festen inzektiziden Formulierung nach Ansprüchen 1 bis 8, dadurch gekennzeichnet, daß der feste Träger mit einer insektiziden Flüssigkeit durchtränkt wird.

10. Verfahren nach Anspruch 9, bei dem die Durchtränkungstemperatur zwischen 100° und 120°C umfaßt wird

11. Verfahren zum Bekämpfen von Schädlingsinsekten in einer Umwelt, das den Schritt des Erwärmens einer festen insektiziden Formulierung nach Ansprüchen 1 bis 8 in einer Heizvorrichtung bei einer Temperatur zwischen 100° und 150°C umfaßt, um kontinuierlich oder diskontinuierlich für wenigstens 300 Stunden eine Menge der insektiziden Substanz in die Umwelt freizusetzen, die biologisch wirksam ist, um die Entfernung oder Zerstörung der Insekten zu erhalten.

12. Verfahren nach Anspruch 11, bei dem die Umwelt eine abgeschlossene Umwelt ist.

## Revendications

1. Formulation insecticide solide appropriée à une utilisation dans un dispositif chauffant à une température comprise entre 100 et 150°C et comprenant un support solide imbibé d'un liquide insecticide, caractérisée en ce que ledit support est constitué d'un copolymère séquencé formé au moyen d'un polyéther en tant que polymère élastomère et d'un polyamide en tant que polymère rigide.

2. Formulation insecticide selon la revendication 1, dans laquelle ledit copolymère séquencé contient de 25 % à 65 % de polyamide.

3. Formulation insecticide selon la revendication 2, dans laquelle ledit copolymère séquencé contient de 40 % à 50 % de polyamide.

4. Formulation insecticide selon l'une quelconque des revendications précédentes, dans laquelle ledit liquide insecticide comprend un ingrédient actif choisi parmi les insecticides organiques de type phosphoreux, les insecticides de type lipidamide, les répulsifs naturels, les pyréthrines naturelles ou les pyréthroïdes synthétiques.

5. Formulation insecticide selon la revendication 4, lesdits pyréthroïdes synthétiques étant choisis parmi les acrinatrine, alétrine sous la forme de D-alétrine, benphlutrine, biphentrine, bioalétrine, S-bioalétrine, esbiotrine, esbiol, bioresmétrine, cycloprotine, ciphlutrine, bêta-ciphlutrine, cialotrine, lambda-cialotrine, cipermétrine, alpha-cipermétrine, bêta-cipermétrine, ciphénotrine, deltamétrine, empentrine, esphenvalérate, phenpropatrine, phenvalérate, flucintrate, tau-fluvalinate, kadétrine, permétrine, phénotrine, pralétrine, resmétrine, téphlutrine, tétramétrine ou tralométrine.

6. Formulation insecticide selon la revendication 4, dans laquelle ledit pyréthroïde synthétique est constitué d'esbiotrine.

7. Formulation insecticide selon les revendications 4 à 6, dans laquelle ledit liquide insecticide comprend seulement l'ingrédient actif sans adjuvants.

8. Formulation insecticide selon l'une quelconque des revendications précédentes, dans laquelle le support est imbibé dudit liquide insecticide en une quantité en poids maximale correspondant à 150 % du poids du support non imbibé.

9. Procédé de préparation d'une formulation insecticide solide selon les revendications 1 à 8, caractérisé par l'imbibition dudit support solide avec un liquide insecticide.

10. Procédé selon la revendication 9, dans lequel la température d'imbibition est comprise entre 100 et 120°C.

11. Procédé de lutte contre des insectes nuisibles dans un environnement, comprenant l'étape consistant à chauffer une formulation insecticide solide selon les revendications 1 à 8 dans un dispositif chauffant à une température comprise entre 100 et 150°C pour laisser échapper dans ledit environnement, de façon continue ou discontinue pendant au moins 300 heures, une substance insecticide en une quantité biologiquement efficace pour obtenir l'élimination ou la destruction desdits insectes.

12. Procédé selon la revendication 11, dans lequel ledit environnement est un environnement clos.
